# EUROPEAN PATENT APPLICATION

(11) **EP 4 199 497 A1**
(43) Date of publication of application: **21.06.2023**
(21) Application number: 21877200.2
(22) Date of filing: 19.07.2021
(51) Int. Cl.: H04N 5/232, E02F 9/20, H04N 7/18

(54) **CONTROL DEVICE FOR WORK MACHINE**

(30) Priority: 09.10.2020 JP 2020171168
(71) Applicant: KOBELCO CONSTRUCTION MACHINERY CO., LTD., Hiroshima-shi Hiroshima 731-5161 (JP)
(72) Inventor: UEDA, Kazuhiro, Hiroshima-shi, Hiroshima 731-5161 (JP); YAMAZAKI, Yoichiro, Tokyo 141-8626 (JP)
(74) Representative: Schön, Christoph
(86) International application number: PCT/JP2021/026953
(87) International publication number: WO 2022/074896

(57) **Abstract**

An actual machine control device 100 of a work machine 10 determines whether a connection center C1 of the work machine 10 is in a state of being presumed to deviate into one of vertical directions from a predetermined height range H. If the connection center C1 is in a state of being presumed to deviate into one of the vertical directions from the predetermined height range H, the actual machine control device 100 controls a driving device 150 so that a viewing angle range of an imaging device 112 is changed into the direction of the deviation.

## Description

### Technical Field

The present invention relates to a control device for a work machine for assisting remote operation of the work machine.

### Background Art

Conventionally, a control device for a work machine has been known that is described in Patent Literature 1. This control device comprises a camera mounted on a hydraulic excavator, two motors that change the viewing angle range of the camera, a controller that controls the two motors, and three sensors that detect the angles of the boom, arm, and bucket. The control device transmits a signal including an image captured by the camera to a remote control room during remote operation of the work machine. This displays the image on a monitor in the remote control room to allow an operator to remotely operate the work machine.

During remote operation of the work machine, this control device draws a straight line from the center of the camera to the end of the bucket based on the detection signals of the three sensors. The control device then determines whether the end of the bucket is positioned within the viewing angle range of the camera from a relationship between the straight line and the viewing angle range of the camera. Then, when the end of the bucket is out of the viewing angle range of the camera, the viewing angle range of the camera is changed to its maximum value. The control device then re-determines whether the end of the bucket is within the changed field of view. When the end of the bucket is out of the changed viewing angle range of the camera, the control device controls the angle of the camera so that the end of the bucket is within the viewing angle range of the camera.

### Citation List

### Patent Literature

Patent Literature 1: Japanese Patent Laid-Open No. H9-270945

### Summary of Invention

### Technical Problem

The above conventional control device determines whether the end of the bucket is out of the viewing angle range of the camera in two steps: before and after change of the viewing angle range of the camera. Therefore, a large positional change of the bucket requires time to change the angle of the camera, resulting in a state in which the end of the bucket cannot be imaged by the camera. Furthermore, a large positional change of the bucket may cause frequent changes in the camera angle. In that case, it is difficult for the operator to recognize the end of the bucket as a video displayed on the monitor frequently changes. This problem occurs not only in imaging the end portion of the bucket but also in imaging a predetermined portion of an attachment such as a boom, an arm, or a bucket.

The present invention has been made to solve the above problems, and it is an object of the present invention to provide a control device for a work machine capable of preventing frequent changes in the posture of the imaging device, preventing a state in which a predetermined portion is not imaged, and improving operability, when an imaging device images a predetermined portion of an attachment.

### Solution to Problem

In order to achieve the above object, the control device for a work machine according to the present invention is a control device for a work machine that captures an image within a predetermined viewing angle range on a front side of the work machine with an imaging device provided in the work machine and that transmits a signal including the image to a remote location to assist remote operation of the work machine, the control device for the work machine comprising:
a driving device provided in the work machine, the driving device changing a posture of the imaging device to change the viewing angle range of the imaging device;
a determination unit that determines whether a predetermined portion of the attachment of the work machine is in a state of being presumed to deviate into one of vertical directions from a predetermined height range with reference to the work machine, a predetermined height range being a range between a first height and a second height below the first height; and
a control unit that controls the driving device so that the viewing angle range of the imaging device is changed into a deviation direction based on a determination result of the determination unit if the predetermined portion of the attachment is in a state of being presumed to deviate into one of the vertical directions from the predetermined height range, the deviation direction being the one of the vertical directions.

By the control device of this work machine, the determination unit determines whether the predetermined portion of the attachment of the work machine is in a state of being presumed to deviate into one of the vertical directions from the predetermined height range between the first height and the second height below the first height with reference to the work machine. Then, when a predetermined portion of the attachment is in a state being presumed to deviate into one of the vertical directions from the predetermined height range, the control unit controls the driving device so that the viewing angle range of the imaging device is changed into the deviation direction. In this way, the viewing angle range of the imaging device is changed when the predetermined portion of the attachment is in a state of being presumed to deviate from the predetermined height range. This, unlike the conventional art, makes it possible to quickly change the viewing angle range of the imaging device, resulting in prevention of a state in which the image of the predetermined portion of the attachment is not captured. In addition, the viewing angle range of the imaging device is not changed as long as the predetermined portion of the attachment does not deviate from the predetermined height range. This can prevent frequent changes in the image captured by the imaging device. As described above, it is possible to improve the operability when an operator remotely operates the work machine.

### Brief Description of Drawings

FIG. 1 is a diagram schematically showing a configuration of a control device for a work machine and a remote operation system according to one embodiment of the present invention.
FIG. 2A is a side view showing a state in which a predetermined portion of an attachment of the work machine is within a predetermined height range.
FIG. 2B is a diagram showing a state in which a viewing angle range of an imaging device is set to a reference range.
FIG. 3A is a side view showing a state in which the predetermined portion of the attachment of the work machine is above the predetermined height range.
FIG. 3B is a diagram showing a state in which the viewing angle range of the imaging device is set to an upper range.
FIG. 4A is a side view showing a state in which the predetermined portion of the attachment of the work machine is below the predetermined height range.
FIG. 4B is a diagram showing a state in which the viewing angle range of the imaging device is set to a lower range.
FIG. 5 is a flowchart showing drive control processing.
FIG. 6 is a flowchart showing drive condition determination processing.
FIG. 7 is a flowchart showing switching condition determination processing.
FIG. 8 is a flowchart showing image control processing.

### Description of Embodiments

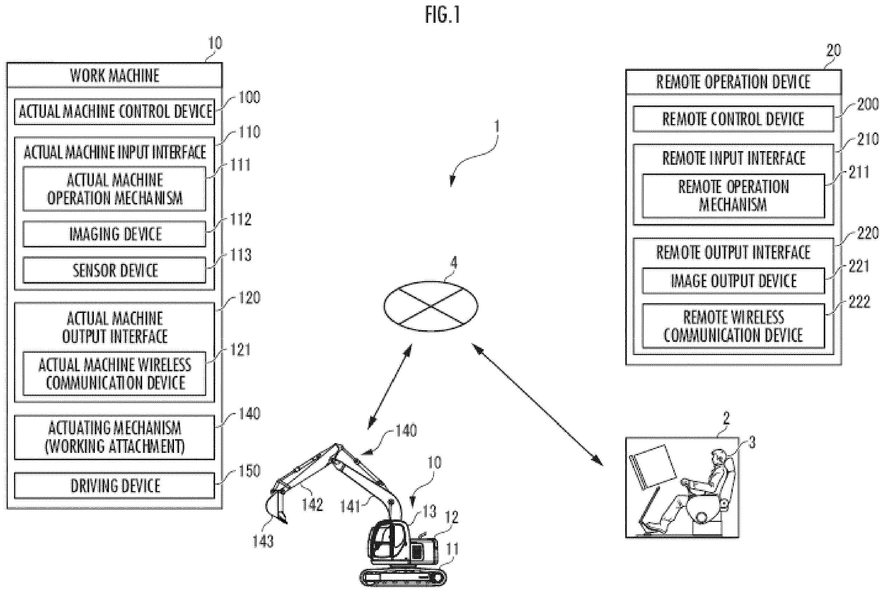

A control device and a remote operation assistance system according to one embodiment of the present invention is to be described below with reference to the drawings. As shown in FIG. 1, a remote operation assistance system 1 of the present embodiment includes a plurality of work machines 10 (only one is shown) and a remote operation device 20.

The work machines 10 and the remote operation device 20 are configured to be able to communicate with each other via a network 4. The network 4 is configured with a wireless network or a wired network. This remote operation device 20 is used by an operator to remotely control the work machines 10 and is provided in a remote control room 2. As shown in FIG. 1, the remote operation device 20 comprises a remote control device 200, a remote input interface 210, and a remote output interface 220.

The remote control device 200 is configured with an arithmetic processing device (single-core processor, or multi-core processor or a processor core configuring this). The remote control device 200 reads necessary data and software from a storage device such as a memory, and executes arithmetic processing on this data according to the software.

The remote input interface 210 comprises a remote operation mechanism 211. This remote operation mechanism 211 includes a traveling operation device, a revolving operation device, a boom operation device, an arm operation device, a bucket operation device, and the like. Each operating device has an operation lever that receives a turning operation. The operation lever of the traveling operation device is operated to move a lower traveling body 11 of the work machine 10.

The operation lever of the revolving operation device is operated to move the revolving mechanism of the work machine 10, and the operation lever of the boom operation device is operated to move a boom cylinder of the work machine 10. The operation lever of the arm operation device is operated to move an arm cylinder of the work machine 10, and the operation lever of the bucket operation device is operated to move a bucket cylinder of the work machine 10.

The remote output interface 220 also comprises an image output device 221, a remote wireless communication device 222, and a speaker (not shown). The image output device 221 is configured with a monitor. When this remote output interface 220 receives an image signal to be described below via the remote wireless communication device 222, the remote output interface 220 outputs an image in the image signal to the image output device 221.

As shown in FIG. 1, the work machine 10 comprises an actual machine control device 100, an actual machine input interface 110, an actual machine output interface 120, an actuating mechanism 140, a driving device 150, and the like. Note that, in the present embodiment, the actual machine control device 100 corresponds to a control device, a determination unit, and a control unit.

This actual machine control device 100 is configured with an arithmetic processing device (single-core processor, or multi-core processor or a processor core configuring this). The actual machine control device 100 reads necessary data and software from a storage device such as a memory, executes arithmetic processing on the data according to the software, and executes drive control processing and the like to be described below.

The work machine 10 is a crawler excavator type construction machine. The work machine 10 comprises a crawler-type lower traveling body 11, an upper revolving body 12 mounted on the lower traveling body 11 so as to be revolvable via a revolving mechanism, and an internal combustion engine (not shown) as a power source. The upper revolving body 12 is provided with a cabin 13 (operation room) on the front left side thereof. The upper revolving body 12 is provided with a working attachment 140 at the front central part thereof.

The actual machine input interface 110 comprises an actual machine operation mechanism 111, an imaging device 112, and a sensor device 113. The actual machine operation mechanism 111 comprises a plurality of real machine operation levers arranged similarly to the remote operation mechanism 211 around a seat arranged inside the cabin 13. The cabin 13 is provided with a drive mechanism or a robot that receives a signal corresponding to the operation aspect of the remote operation mechanism 211 and moves the actual machine operation levers based on the received signal.

The imaging device 112 is configured with, for example, a camera installed inside the cabin 13. The imaging device 112 images the environment including at least part of the actuating mechanism 140 through a front window 13a and a ceiling window 13b.

The sensor device 113 is configured with a boom angle sensor, an arm angle sensor, and an imaging device angle sensor. This boom angle sensor detects the boom angle, which is an angle of a boom 141 with respect to the upper revolving body 12.

The arm angle sensor detects the arm angle, which is an angle of an arm 142 with respect to the boom 141. Further, the imaging device angle sensor detects the imaging device angle, which is an angle of the optical axis of the imaging device 112 that is changed by the driving device 150.

The actual machine output interface 120 comprises an actual machine wireless communication device 121 that executes wireless communication with the remote operation device 20.

A working attachment 140 that is the actuating mechanism comprises a boom 141, an arm 142 and a bucket 143. The boom 141 is mounted on the upper revolving body 12 so as to be able to move up and down, and is driven by a boom cylinder to turn around a horizontal axis, thereby changing the boom angle.

The arm 142 is turnably connected to the end of the boom 141. The arm 142 is driven by an arm cylinder to turn around the horizontal axis, thereby changing the arm angle. The bucket 143 is turnably connected to the end of the arm 142 and is driven by a bucket cylinder to turn around the horizontal axis with respect to the arm 142.

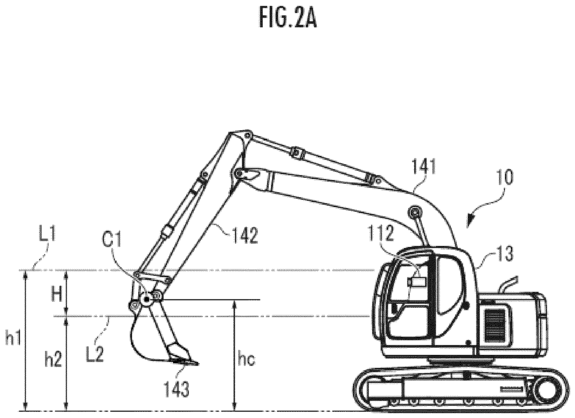

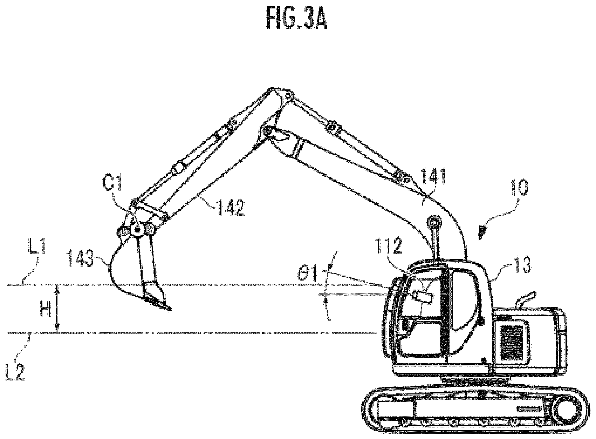

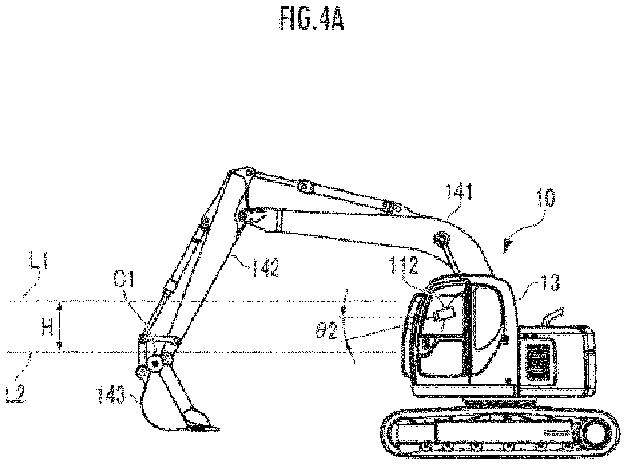

The driving device 150 changes a posture of the imaging device 112, and is configured with a motor and a gear mechanism (not shown). As is to be described below, the driving device 150 is controlled by the actual machine control device 100 to change the posture (angle) of the imaging device 112 in three steps between a reference posture shown in FIG. 2A, an upper posture shown in FIG. 3A, and a lower posture shown in FIG. 4A.

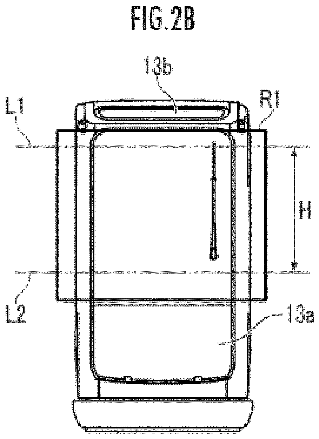

When the posture of imaging device 112 is the reference posture shown in FIG. 2A, the optical axis of the imaging device 112 is parallel to the bottom surface of work machine 10. With this posture, a reference range R1 that is the viewing angle range of the imaging device 112 is as shown in FIG. 2B. Specifically, the reference range R1 has: both left and right ends located outside the left and right ends of the front window 13a of the cabin 13; an upper end substantially coinciding with the upper end of the front window 13a; and a lower end located slightly below the center of the front window 13a in the vertical direction.

Here, a predetermined height range H (= h1 - h2) is defined as a range between a first height h1 and a lower second height h2 from the bottom surface of the work machine 10, as shown in FIG. 2A. With this definition, the reference range R1 is set to a range where it is possible to image the center C1 of the connecting portion of the bucket 143 with the arm 142 (hereinafter referred to as "connection center") when the connection center C1 is positioned within the predetermined height range H. In the present embodiment, the connection center C1 corresponds to a predetermined portion of the attachment.

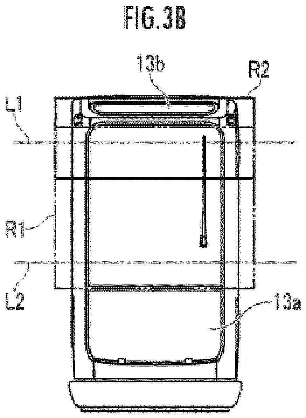

When the posture of the imaging device 112 is the upper posture shown in FIG. 3A, the optical axis of the imaging device 112 is inclined upward and to the left in the figure by a first predetermined angle θ1 compared to the case in which the posture of the imaging device 112 is the reference posture. Accordingly, an upper range R2, which is the viewing angle range of the imaging device 112, is as shown in FIG. 3B.

Specifically, the upper range R2 has: both left and right ends that is located outside the left and right ends of the front window 13a and the ceiling window 13b of the cabin 13, and that covers the entire ceiling window 13b; and a lower end that is located above the front window 13a. Additionally, the lower part of the upper range R2 overlaps with the upper part of the reference range R1.

The upper range R2 is set to a range in which the connection center C1 described above can be imaged when the connection center C1 is positioned higher than the predetermined height range H and is visible from the ceiling window 13b and above the center of the front window 13a in the vertical direction.

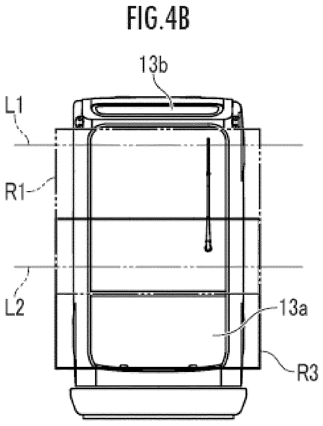

When the posture of the imaging device 112 is the lower posture shown in FIG. 4A, the optical axis of the imaging device 112 is inclined downward to the left in the figure by a second predetermined angle θ2 compared to the case in which the posture of the imaging device 112 is in the reference posture. Accordingly, a lower range R3, which is the viewing angle range of the imaging device 112, is as shown in FIG. 4B.

Specifically, the lower range R3 has: both left and right ends located outside the left and right ends of the front window 13a of the cabin 13; the upper end located slightly above the center of the front window 13a in the vertical direction; and the lower end substantially coinciding with the lower end of the front window 13a. Additionally, substantially the upper half of the lower range R3 overlaps with substantially the lower half of the reference range R1.

The lower range R3 is set to a range in which the connection center C1 described above can be imaged when the connection center C1 is positioned at a position lower than the predetermined height range H and visible from the front window 13a.

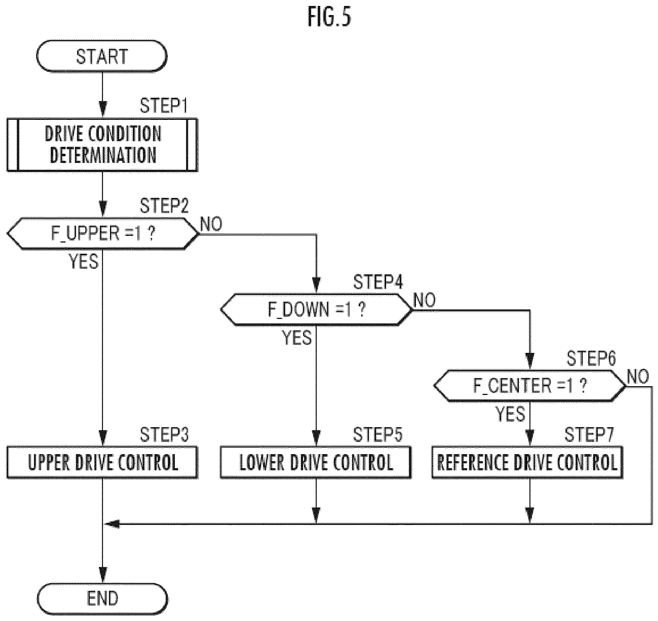

Next, drive control processing is to be described with reference to FIG. 5. This drive control processing controls the driving device 150 to change the posture of the imaging device 112 in three steps between the reference posture, the upper posture, and the lower posture described above. The drive control processing is executed by the actual machine control device 100 at a predetermined cycle.

As shown in the figure, drive condition determination processing is first executed (FIG. 5/STEP 1). This drive condition determination processing is to determine conditions for executing the following three drive control processes, and the details thereof are to be described below.

Next, it is determined whether an upper drive control flag F_UPPER is "1" (FIG. 5/STEP2). This upper drive control flag F_UPPER indicates whether a condition for executing upper drive control processing to be described below are satisfied.

If the determination is affirmative (FIG. 5/STEP 2...YES) and the condition for executing the upper drive control processing are satisfied, the upper drive control processing is executed (FIG. 5/STEP 3). In this upper drive control processing, the driving device 150 is controlled so as to change the posture of the imaging device 112 from the reference posture to the upper posture.

At that time, the posture change speed of the imaging device 112 is controlled corresponding to the moving speed V of the connection center C1. Specifically, control is performed so that the posture change speed of the imaging device 112 increases as the moving speed V of the connection center C1 increases. In this case, the moving speed V of the connection center C1 is calculated based on the detection signal of the sensor device 113 described above. After upper drive control processing is executed as described above, this processing ends.

Contrarily, if the above determination is negative (FIG. 5/STEP 2...NO) and the condition for executing the upper drive control processing is not satisfied, it is determined whether the lower drive control flag F_DOWN is "1" (FIG. 5/STEP4). This lower drive control flag F_DOWN indicates whether a condition for executing the lower drive control processing described below are satisfied.

When this determination is affirmative (FIG. 5/STEP 4...YES) and the condition for executing the lower drive control processing are satisfied, the lower drive control processing is executed (FIG. 5/STEP 5). In this lower drive control processing, the driving device 150 is controlled so as to change the posture of the imaging device 112 from the reference posture to the lower posture.

At that time, the posture change speed of the imaging device 112 is controlled in the same manner as in the upper drive control processing. In other words, control is performed so that the posture change speed of the imaging device 112 increases as the moving speed V of the connection center C1 increases. After lower drive control processing is executed as described above, this processing ends.

Contrarily, if the above determination is negative (FIG. 5/STEP 4...NO) and the condition for executing the lower drive control processing are not satisfied, it is determined whether the reference drive control flag F_CENTER is "1" (FIG. 5/STEP6). This reference drive control flag F_CENTER indicates whether a condition for executing the reference drive control processing to be described below are satisfied.

If this determination is affirmative (FIG. 5/STEP 6...YES) and the condition for executing the reference drive control processing are satisfied, the reference drive control processing is executed (FIG. 5/STEP 7). In this reference drive control processing, the driving device 150 is controlled so as to change the posture of the imaging device 112 from the lower posture or the upper posture to the reference posture.

At that time, the posture change speed (that is, the rotational angular speed) of the imaging device 112 is controlled in the same manner as the upper drive control processing and the lower drive control processing. In other words, control is performed so that the posture change speed of the imaging device 112 increases as the moving speed V of the connection center C1 increases. After the reference drive control processing is executed as described above, this processing ends.

Contrarily, if the above determination is negative (FIG. 5/STEP 6...NO) and the condition for executing the reference drive control processing are not satisfied, this processing ends as it is.

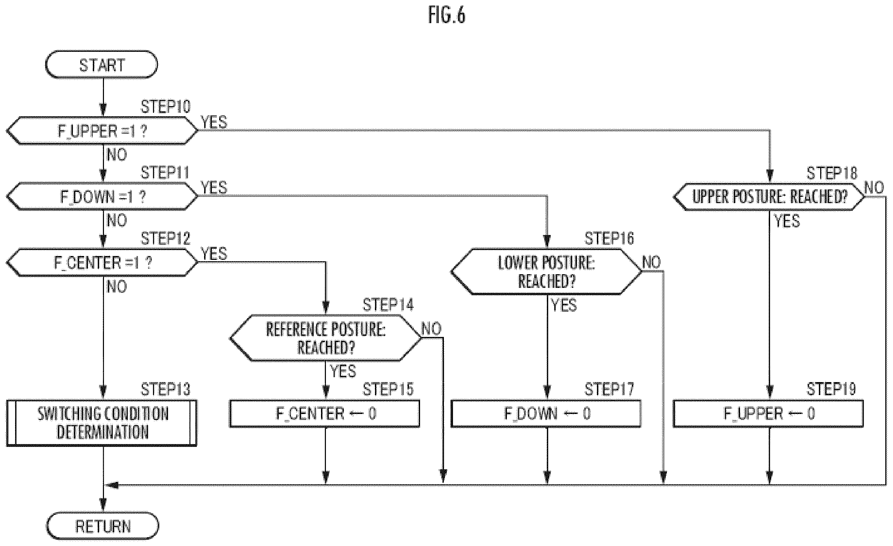

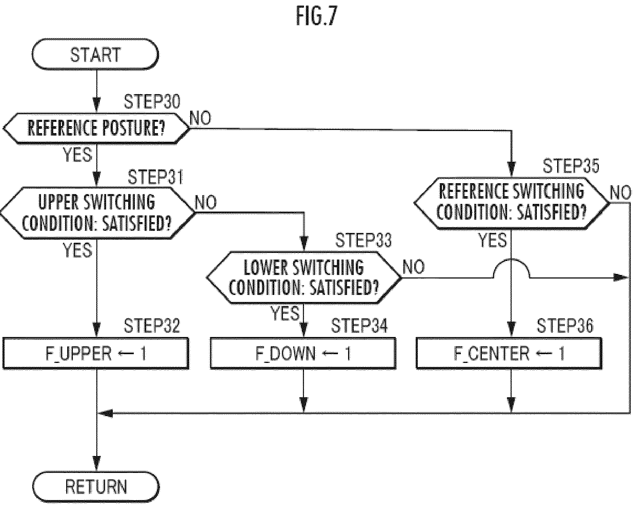

Next, the drive condition determination processing described above is to be described with reference to FIGS. 6 and 7. In this drive condition determination processing, as shown in FIG. 6, it is first determined whether the upper drive control flag F_UPPER is "1" (FIG. 6/STEP 10).

If this determination is negative (FIG. 6/STEP 10...NO) and the condition for executing the upper drive control processing is not satisfied, it is determined whether the lower drive control flag F_DOWN is "1" (FIG. 6/STEP 11). If this determination is negative (FIG. 6/STEP 11...NO) and the condition for executing the lower drive control processing are not satisfied, it is determined whether the reference drive control flag F_CENTER is "1" (FIG. 6/STEP 12).

If this determination is negative (FIG. 6/STEP 12...NO) and the condition for executing the reference drive control processing are not satisfied, the switching condition determination processing is executed (Fig. 6/STEP 13). This switching condition determination processing is to determine whether a condition for switching the posture of the imaging device 112 between the above-described reference posture, upper posture, and lower posture is satisfied. Specifically, the processing is executed as shown in FIG. 7.

As shown in the figure, it is first determined whether the imaging device 112 is in the reference posture (FIG. 7/STEP 30). If this determination is affirmative (FIG. 7/STEP 30...YES) and the imaging device 112 is in the reference posture, it is determined whether the upper switching condition is satisfied (FIG. 7/STEP 31). This upper switching condition is a condition for executing the above-described upper drive control processing.

In this case, if all of the following conditions (f1) to (f2) are satisfied, it is determined that the upper switching condition is satisfied. Otherwise, it is determined that the upper switching condition is not satisfied.
(f1) At the moving speed V of the connection center C1 described above, V ≥ Vref is satisfied.
(f2) At the height hc of the connecting center C1, h1 - hc ≤ α is satisfied.

In this case, both the moving speed V and the height hc of the connection center C1 are calculated based on the detection result of the sensor device 113 described above. The moving speed V is calculated as an absolute value of speed. The above Vref is a positive predetermined speed and α is a positive predetermined value. If all of the above (f1) to (f2) are satisfied, the connection center C1 is in a state of being presumed to deviate upward from the predetermined height range H described above.

If the above determination is affirmative (FIG. 7/STEP 31...YES) and the upper switching condition is satisfied, the upper drive control flag F_UPPER is set to "1" to indicate that satisfaction (FIG. 7/STEP32). After that, this processing ends.

Contrarily, if the above determination is negative (FIG. 7/STEP 31...NO) and the upper switching condition is not satisfied, it is determined whether the lower switching condition is satisfied (FIG. 7/STEP 33). This lower switching condition is a condition for executing the lower drive control processing described above.

In this case, if all of the following conditions (f3) to (f4) are satisfied, it is determined that the lower switching condition is satisfied. Otherwise, it is determined that the lower switching condition is not satisfied.
(f3) V ≥ Vref is satisfied.
(f4) hc - h2 ≤ α is satisfied.

If all of the above conditions (f3) to (f4) are satisfied the connection center C1 is in a state of being presumed to deviate downward from the predetermined height range H described above. In the above conditions (f1) and (f3), the predetermined values to be compared with the absolute value V of the moving speed may be set to different values. Furthermore, in the above conditions (f2) and (f4), the predetermined values to be compared with the value h1 - hc and the value hc - h2 may be set to different values.

If the above determination is affirmative (FIG. 7/STEP 33...YES) and the lower switching condition is satisfied, the lower drive control flag F_DOWN is set to "1" to indicate that satisfaction (FIG. 7/STEP34). After that, this processing ends.

Contrarily, if the above determination is negative (FIG. 7/STEP 34...NO) and the lower switching condition is not satisfied, this processing ends as it is.

Contrarily, if the above determination is negative (FIG. 7/STEP 30...NO) and the imaging device 112 is not in the reference posture, in other words, if the imaging device 112 is in the upper posture or the lower posture, it is determined whether the reference switching condition is satisfied (FIG. 7/STEP 35).

The reference switching condition is a condition for executing reference drive control processing for switching the posture of the imaging device 112 from the upper posture or the lower posture to the reference posture. In this case, if all of the following conditions (f5) to (f6) are satisfied, or if all of the following conditions (f7) to (f8) are satisfied, it is determined that the reference switching condition is satisfied, and otherwise it is determined that the reference switching condition is not satisfied.

(f5) V ≥ Vref is satisfied.
(f6) hc - h1 ≤ α is satisfied.
(f7) V ≥ Vref is satisfied.
(f8) h2 - hc ≤ α is satisfied.

In the above conditions (f5) and (f7), the predetermined values to be compared with the absolute value V of the moving speed may be set to different values. Furthermore, in the above conditions (f6) and (f8), the predetermined values to be compared with the value hc - h1 and the value h2 - hc may be set to different values.

If the above determination is affirmative (FIG. 7/STEP 35...YES) and the reference switching condition is satisfied, the reference drive control flag F_CENTER is set to "1" to indicate the satisfaction (FIG. 7/STEP 36). After that, this processing ends.

Contrarily, if the above determination is negative (FIG. 7/STEP 35...NO) and the reference switching condition is not satisfied, this processing ends as it is.

Returning to FIG. 6, after the switching condition determination processing (FIG. 6/STEP 13) is executed as described above, the drive condition determination processing ends.

Contrarily, if the above determination is affirmative (FIG. 6/STEP 12...YES) and the condition for executing the reference drive control processing is satisfied, in other words, if the reference drive control processing is being executed, it is determined whether the posture of the imaging device 112 has reached the reference posture (FIG. 6/STEP 14).

If this determination is affirmative (FIG. 6/STEP 14...YES) and the posture of the imaging device 112 reaches the reference posture, it is determined that the reference drive control processing should be ended. To indicate this, the reference drive control flag F_CENTER is set to "0" (FIG. 6/STEP 15). After that, this processing ends. Contrarily, if the above determination is negative (FIG. 6/STEP 14...NO) and the posture of the imaging device 112 has not reached the reference posture, this processing ends as it is.

Contrarily, if the above determination is affirmative (FIG. 6/STEP 11...YES) and the condition for executing the lower drive control processing are satisfied, in other words, if the lower drive control processing is being executed, it is determined whether the posture of the imaging device 112 has reached the lower posture (FIG. 6/STEP 16).

If this determination is affirmative (FIG. 6/STEP 16...YES) and the posture of the imaging device 112 reaches the lower posture, it is determined that the lower drive control processing should be ended. To indicate this, the lower drive control flag F_DOWN is set to "0" (FIG. 6/STEP 17). After that, this processing ends. Contrarily, if the above determination is negative (FIG. 6/STEP 16...NO) and the posture of the imaging device 112 has not reached the lower posture, this processing ends as it is.

Contrarily, if the above-mentioned determination is affirmative (FIG. 6/STEP 10...YES) and the condition for executing the upper drive control processing is satisfied, in other words, if the upper drive control processing is being executed, it is determined whether the posture of the imaging device 112 has reached the upper posture (FIG. 6/STEP 18).

If this determination is affirmative (FIG. 6/STEP 18...YES) and the posture of the imaging device 112 reaches the upper posture, it is determined that the upper drive control processing should be ended. To indicate this, the upper drive control flag F_UPPER is set to "0" (FIG. 6/STEP19). After that, this processing ends. Contrarily, if the above determination is negative (FIG. 6/STEP 18...NO) and the posture of the imaging device 112 has not reached the upper posture, this processing ends as it is.

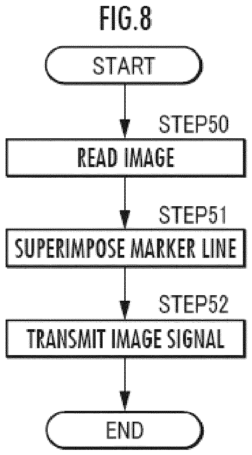

Next, image control processing is to be described with reference to FIG. 8. This image control processing is to superimpose a first marker line L1 and a second marker line L2 on the image captured by the imaging device 112, and is performed by the actual machine control device 100 at a predetermined cycle. In the present embodiment, the first marker line L1 corresponds to a first marker image, and the second marker line L2 corresponds to a second marker image.

As shown in FIG. 8, first, an image captured by the imaging device 112 (hereinafter referred to as "captured image") is read (FIG. 8/STEP 50).

Next, marker line superimposition processing is executed (FIG. 8/STEP 51). In this marker line superimposition processing, at least one of the first marker line L1 and the second marker line L2 is superimposed on the captured image. The first marker line L1 is a line indicating the first height h1 that is the upper limit of the predetermined height range H, and the second marker line L2 is a line indicating the second height h2 that is the lower limit of the predetermined height range H.

For example, when the posture of the imaging device 112 is the reference posture described above, the first marker line L1 and the second marker line L2 are respectively superimposed on the upper and lower parts of the captured image within the reference range R1, as shown in FIG. 2B.

When the posture of the imaging device 112 is the above-described upper posture, the first marker line L1 is superimposed on the region where the upper range R2 overlaps with the reference range R1, as shown in FIG. 3B.

When the posture of the imaging device 112 is the lower posture described above, the second marker line L2 is superimposed on the region that is located in an upper part of the lower range R3 and overlaps with the reference range R1, as shown in FIG. 4B.

While the above-described upper drive control processing changes the posture of the imaging device 112 from the reference posture to the upper posture to change the viewing angle range of the imaging device 112 from the reference range R1 to the upper range R2, the first marker line L1 is always superimposed on the captured image of the imaging device 112.

Similarly, while the reference drive control described above changes the posture of the imaging device 112 from the upper posture to the reference posture to change the viewing angle range of the imaging device 112 from the upper range R2 to the reference range R1, the first marker line L1 is always superimposed on the captured image of the imaging device 112.

In contrast, while the lower drive control processing described above changes the posture of the imaging device 112 from the reference posture to the lower posture to change the viewing angle range of the imaging device 112 from the reference range R1 to the lower range R3, the second marker line L2 is always superimposed on the captured image of the imaging device 112.

Similarly, while the reference drive control described above changes the posture of the imaging device 112 from the lower posture to the reference posture to change the viewing angle range of the imaging device 112 from the lower range R3 to the reference range R1, the second marker line L2 is always superimposed on the captured image of the imaging device 112.

As described above, in the marker line superimposition processing, at least one of the first marker line L1 and the second marker line L2 is superimposed on the captured image of the imaging device 112.

Next, an image signal including the captured image on which at least one of the first marker line L1 and the second marker line L2 is superimposed as described above is transmitted to the remote control device 200 of the remote operation device 20 (FIG. 8/STEP52). After that, this processing ends.

When the image signal is thus transmitted to the remote control device 200 of the remote operation device 20, the captured image of the image signal is output from the image output device 221 of the remote operation device 20 to the operator 3. Thereby, the operator 3 can remotely operate the work machine 10 while visually recognizing the image near the connection center C1.

As described above, the actual machine control device 100 of the present embodiment executes the upper drive control processing when the upper switching condition is satisfied and the connection center C1 is presumed to deviate upward from the predetermined height range H. Thereby, the viewing angle range of the imaging device 112 is changed from the reference range R1 to the upper range R2. If the lower switching condition is satisfied and the connection center C1 is presumed to deviate downward from the predetermined height range H, the lower drive control processing is executed. Thereby, the viewing angle range of the imaging device 112 is changed from the reference range R1 to the lower range R3.

In this way, when the connection center C1 is in a state of being presumed to deviate from the predetermined height range H, the viewing angle range of the imaging device 112 is changed from the reference range R1 to the upper range R2 or the lower range R3. This, unlike the conventional art, makes it possible to quickly change the viewing angle range of the imaging device 112, resulting in prevention of a state in which the connection center C1 is not imaged. In addition, the viewing angle range of the imaging device 112 is not changed as long as the connection center C1 does not deviate from the predetermined height range H. This can prevent frequent changes in the image captured by the imaging device 112.

Also, the posture change speed of the imaging device 112 in the upper drive control processing and the lower drive control processing is controlled so as to increase as the moving speed V of the connection center C1 increases. This makes it possible to more reliably prevent a state in which the connection center C1 is not imaged.

Furthermore, the upper part of the reference range R1 and the lower part of the upper range R2 are configured to overlap with each other, and the lower part of the reference range R1 and the upper part of the lower range R3 are configured to overlap with each other. This makes it possible to prevent the operator 3 who remotely operates the work machine 10 from having a dead angle before and after switching the viewing angle range of the imaging device 112.

In addition, the imaging device 112 is arranged in the cabin 13 of the work machine 10, and the upper range R2 and the lower range R3 are set to ranges in which the connection center C1 can be imaged through the front window 13a and the ceiling window 13b of the cabin 13, respectively when the connection center C1 deviates upward and downward from the predetermined height range H. Therefore, even when the connection center C1 deviates upward and downward from the predetermined height range H, the operator 3 who remotely operates the work machine 10 can refer to an image near the connection center C1 as an image viewed from the cabin 13 of the work machine 10. This allows the operator 3 to recognize continuity of the images, with reference to the cabin 13, before and after change in the viewing angle range of the imaging device 112.

In the image control processing, when the viewing angle range of the imaging device 112 is changed between the reference range R1 and the upper range R2, the first marker line L1 indicating the first height h1 is displayed on a part, in the captured image, where the upper part of the reference range R1 overlaps with the lower part of the upper range R2. In addition to this, when the viewing angle range of the imaging device 112 is changed between the reference range R1 and the lower range R3, the second marker line indicating the second height h2 is superimposed and displayed on a part, in the captured image, where the lower part of the reference range R1 overlaps with the upper part of the lower range R3. This allows the operator 3 to recognize continuity of the captured images during the change, and before and after the change with reference to the first marker line L1 and the second marker line, when the viewing angle range of the imaging device 112 is changed between the reference range R1 and the upper range R2, and when it is changed between the reference range R1 and the lower range R3.

Both the determination of whether the upper switching condition is satisfied or not and the determination of whether the lower switching condition is satisfied or not are executed based on the distance from the height hc of the connection center C1 to the first height h1 or the second height h2 and the moving speed V of the connection center C 1. Therefore, these determinations can be performed with high accuracy. This makes it possible to improve operability when the operator 3 remotely operates the work machine 10.

Note that the embodiment is an example in which the control device to be used is the actual machine control device 100. Alternatively, the control device to be used may be the remote control device 200 provided in the remote control room 2, or the control device to be used may be a server (not shown) provided to be able to communicate with work machine 10 via the network 4.

The embodiment is an example using the actual machine control device 100 provided in the work machine 10 as the determination unit. Alternatively, the remote control device 200 provided in the remote control room 2 may be used as the determination unit, or a server (not shown) provided to be able to communicate with work machine 10 via the network 4 may be used as the determination unit.

The embodiment is an example in which the control unit to be used is the actual machine control device 100 provided in the work machine 10. Alternatively, the control unit to be used may be the remote control device 200 provided in the remote control room 2, or the control unit to be used may be a server (not shown) provided to be able to communicate with work machine 10 via the network 4.

The embodiment is an example in which the connection center C1 is set to a predetermined portion of the attachment of the work machine. Alternatively, the end part or a predetermined portion of the bucket 143 may be set to the predetermined portion of the attachment, or a predetermined portion of the arm 142 may be set to the predetermined portion of the attachment.

The actual machine control device 100 may be configured to control the driving device 150 so that the speed at which the viewing angle range of the imaging device 112 is changed from the reference range R1 to the upper range R2 is faster than the speed at which the viewing angle range of the imaging device 112 is changed from the reference range R1 to the lower range R3. Alternatively, the actual machine control device 100 may be configured to control the driving device 150 so that the former is slower than the latter.

The first predetermined angle θ1 just needs to be set to an angle such that, when the viewing angle range of the imaging device 112 is switched from the reference range R1 to the upper range R2, the connection center C1 is positioned within the predetermined region of the upper range R2; and the second predetermined angle θ2 just needs to be set to an angle such that, when the viewing angle range of the imaging device 112 is switched from the reference range R1 to the lower range R3, the connection center C1 is positioned within the predetermined region of the lower range R3.

The embodiment is an example in which the first marker line L1, which is the line indicating the first height h1, is used as the first marker image, and the second marker line L2, which is the line indicating the second height h2, is used as the second marker image. However, it is not essential that the first marker line L1 and the second marker line L2 match the first height h1 and the second marker line L2, respectively. For example, the first marker line L1 may be displayed at a position shifted in the vertical direction with respect to the first height h1, and the second marker line L2 may be displayed at a position shifted in the vertical direction with respect to the second height h2. Also, the first marker image and the second marker image may be figures having shapes (for example, rectangles, circles, triangles, etc.) instead of lines such as the first marker line L1 and the second marker line L2.

In the work machine control device according to the present invention, it is preferable that the control unit determine the speed at which the viewing angle range of the imaging device is changed in one of the vertical directions corresponding to the moving speed of the predetermined portion of the attachment.

According to this work machine control device, the control unit controls the speed at which the viewing angle range of the imaging device is changed in one of the vertical directions corresponding to the moving speed of the predetermined portion of the attachment. Therefore, the viewing angle range of the imaging device can be changed at a speed corresponding to the moving speed of the predetermined portion of the attachment. This makes it possible to more reliably prevent a state in which the predetermined portion of the attachment is not imaged, and to further improve operability when an operator remotely operates the work machine.

The control device for the work machine according to the present invention is preferably configured so that:
the driving device is configured to be able to change the viewing angle range of the imaging device between a reference range, an upper range, and a lower range, the reference range being a range within which the predetermined portion of the attachment can be imaged when the predetermined portion is within the predetermined height range, the upper range having a center located above a center of the reference range by a first predetermined angle, the lower range having a center located lower than the center of the reference range by a second predetermined angle; and
an upper part of the reference range and a lower part of the upper range are configured to overlap with each other, and a lower part of the reference range and an upper part of the lower range are configured to overlap with each other.

This work machine control device is configured to be able to change the viewing angle range of the imaging device between a reference range, an upper range, and a lower range. The reference range is a range within which a predetermined portion of the attachment can be imaged when the predetermined portion is within a predetermined height range. The upper range has a center located above the center of the reference range by a first predetermined angle. The lower range has a center located lower than the center of the reference range by the second predetermined angle. In addition, the upper part of the reference range and the lower part of the upper range are configured to overlap with each other, and the lower part of the reference range and the upper part of the lower range are configured to overlap with each other. This makes it possible to prevent the operator who remotely operates the work machine from having a dead angle before and after switching the viewing angle range of the imaging device. This can reliably provide high operability.

The control device for the work machine according to the present invention is preferably configured so that the imaging device is arranged inside a cabin of the work machine, and the upper range and the lower range are set to a range in which the predetermined portion of the attachment can be imaged through a window of the cabin when the predetermined portion respectively deviates upward and downward from the predetermined height range.

According to this work machine control device, the imaging device is arranged in the cabin of the work machine. Further, the upper range and the lower range are set to a range in which the predetermined portion of the attachment can be imaged through the window of the cabin when the predetermined portion of the attachment deviates respectively upward and downward from the predetermined height range. Therefore, even when the predetermined portion of the attachment deviates upward and downward from the predetermined height range, an operator who remotely operates the work machine can refer to an image of a predetermined portion of the attachment as viewed from the cabin of the work machine. This allows the operator to recognize continuity of the images, with reference to the cabin, before and after change in the viewing angle range of the imaging device, and to be reliably provided with high operability in remotely operating the work machine.

The control device for the work machine according to the present invention is preferably configured so that
the control unit further executes an image control that:
superimposes and displays a first marker image on a part, in the image captured by the imaging device, where an upper part of the reference range overlaps with a lower part of the upper range, when the viewing angle range of the imaging device is changed between the reference range and the upper range; and
superimposes and displays a second marker image on a part, in the image captured by the imaging device, where an lower part of the reference range overlaps with an upper part of the lower range, when the viewing angle range of the imaging device is changed between the reference range and the lower range.

According to this work machine control device, image control is further executed by the control unit. This image control displays the first marker image on a part, in the image captured by the imaging device, where the upper part of the reference range overlaps with the lower part of the upper range, when the viewing angle range of the imaging device is changed between the reference range and the upper range. In addition to this, the image control superimposes and displays the second marker image on a part, in the image captured by the imaging device, where the lower part of the reference range overlaps with the upper part of the lower range, when the viewing angle range of the imaging device is changed between the reference range and the lower range. This allows the operator to recognize continuity of the images during the change, and before and after the change with reference to the first marker image and the second marker image, when the viewing angle range of the imaging device is changed between the reference range and the upper range, and when it is changed between the reference range and the lower range, and can reliably provide high operability in remotely operating the work machine.

The control device for the work machine according to the present invention is preferably configured so that if a distance from a height of the predetermined portion of the attachment to one of the first height and the second height is equal to or less than a predetermined value and a moving speed at which the predetermined portion moves toward the one of the heights is equal to or higher than a predetermined speed, the determination unit determines that the predetermined portion of the attachment is in a state of being presumed to deviate into one of vertical directions from the predetermined height range.

The control device of this work machine determines whether a predetermined portion of the attachment is likely to deviate from a predetermined height range based on the distance from the height of the predetermined portion to the first height or the second height, and the moving speed at which the predetermined portion moves toward the first height or the second height. Therefore, these determinations can be performed with high accuracy.

### Reference Signs List

- 10: work machine
- 13: cabin
- 13a: front window (window of cabin)
- 13b: ceiling window (window of cabin)
- 100: actual machine control device (control device, determination unit, control unit)
- 112: imaging device
- 150: driving device
- C1: connection center (predetermined portion of attachment)
- hc: height of connection center (height of predetermined portion of attachment)
- V: moving speed of connection center (moving speed of predetermined portion of attachment)
- Vref: predetermined speed
- h1: first height
- h2: second height
- H: predetermined height range
- α: predetermined value
- R1: reference range
- R2: upper range
- R3: lower range
- θ1: first predetermined angle
- θ2: second predetermined angle
- L1: first marker line (first marker image)
- L2: second marker line (second marker image)

## Claims

1. A control device for a work machine that captures an image within a predetermined viewing angle range on a front side of the work machine with an imaging device provided in the work machine and that transmits a signal including the image to a remote location to assist remote operation of the work machine, the control device for the work machine comprising:
a driving device provided in the work machine, the driving device changing a posture of the imaging device to change the viewing angle range of the imaging device;
a determination unit that determines whether a predetermined portion of an attachment of the work machine is in a state of being presumed to deviate into one of vertical directions from a predetermined height range with reference to the work machine, the predetermined height range being a range between a first height and a second height below the first height; and
a control unit that controls the driving device so that the viewing angle range of the imaging device is changed into a deviation direction based on a determination result of the determination unit if the predetermined portion of the attachment is in the state of being presumed to deviate into one of the vertical directions from the predetermined height range, the deviation direction being the one of the vertical directions.

2. The control device for the work machine according to claim 1, wherein
the control unit determines a speed at which the viewing angle range of the imaging device is changed in one of the vertical directions corresponding to a moving speed of the predetermined portion of the attachment.

3. The control device for the work machine according to claim 1 or 2, wherein:
the driving device is configured to be able to change the viewing angle range of the imaging device between a reference range, an upper range, and a lower range, the reference range being a range within which the predetermined portion of the attachment can be imaged when the predetermined portion is within the predetermined height range, the upper range having a center located above a center of the reference range by a first predetermined angle, the lower range having a center located lower than the center of the reference range by a second predetermined angle; and
an upper part of the reference range and a lower part of the upper range are configured to overlap with each other, and a lower part of the reference range and an upper part of the lower range are configured to overlap with each other.

4. The control device for the work machine according to claim 3, wherein
the imaging device is arranged inside a cabin of the work machine, and
the upper range and the lower range are set to a range in which the predetermined portion of the attachment can be imaged through a window of the cabin when the predetermined portion respectively deviates upward and downward from the predetermined height range.

5. The control device for the work machine according to claim 3, wherein
the control unit further executes an image control that:
superimposes and displays a first marker image on a part, in the image captured by the imaging device, where an upper part of the reference range overlaps with a lower part of the upper range, when the viewing angle range of the imaging device is changed between the reference range and the upper range; and
superimposes and displays a second marker image on a part, in the image captured by the imaging device, where a lower part of the reference range overlaps with an upper part of the lower range, when the viewing angle range of the imaging device is changed between the reference range and the lower range.

6. The control device for the work machine according to any one of claims 1 to 5, wherein
if a distance from a height of the predetermined portion of the attachment to one of the first height and the second height is equal to or less than a predetermined value and a moving speed at which the predetermined portion moves toward the one of the heights is equal to or higher than a predetermined speed, the determination unit determines that the predetermined portion of the attachment is in the state of being presumed to deviate into one of the vertical directions from the predetermined height range.
